(19) **Europäisches Patentamt**

**European Patent Office**

**Office européen des brevets**

(11) Publication number: **0 580 059 A2**

## (12) EUROPEAN PATENT APPLICATION

(21) Application number: **93111166.0**

(22) Date of filing: **13.07.93**

(51) Int. Cl.5: **A23K 1/17, A23K 1/18**

(30) Priority: **24.07.92 US 919809**
**28.05.93 US 66613**

(43) Date of publication of application:
**26.01.94 Bulletin 94/04**

(84) Designated Contracting States:
**AT BE CH DE DK ES FR GB GR IE IT LI NL PT SE**

(71) Applicant: **F. HOFFMANN-LA ROCHE AG**
**Grenzacherstrasse 124**
**CH-4002 Basel(CH)**

(72) Inventor: **Eisenbeis, Howard George**
**274 Jacobstown-Arneytown Road**
**Wrightstown, N.J. 08562(US)**
Inventor: **Miller, Ross William**
**365 Wood Drive**
**Blue Bell, Pennsylvania 19422(US)**
Inventor: **Schildknecht, Eugene George**
**9 Hillside Road**
**Hackettstown, NJ 07840(US)**

(74) Representative: **Cottong, Norbert A. et al**
**Grenzacherstrasse 124**
**Postfach 3255**
**CH-4002 Basel (CH)**

(54) **Growth promotion in swine.**

(57) Methods and feed compositions for increasing the growth and feed utilization of swine employ frenolicin B or a physiologically acceptable salt or ester thereof as the active ingredient. Frenolicin B is used in sufficient amounts to achieve the desired results, for example, about 22 mg to about 66 mg of frenolicin B per kg of feed composition. The invention also embraces swine feed premix compositions intended for the preparation of said swine feed compositions, and a method of preparing the swine feed compositions by mixing the active ingredient directly or by way of the premix with conventional swine feed.

The present invention relates to the promotion of growth and feed utilization in swine, and, more particularly, to a method of increasing growth and feed utilization in swine by using frenolicin B as the active ingredient, to swine feed compositions and swine feed premix compositions containing said frenolicin B as the active ingredient, and to a method of preparing such swine feed compositions.

Frenolicin B is a known fermentation product having antibiotic properties, as is described e.g. in U.S. Patent No. 4,199,514. Frenolicin B also has anticoccidial activity and enhances the activity of ionophorous polyether anticoccidial agents, for example, lasalocid, against avian coccidiosis (see U.S. Patent No. 4,839,382).

It has now been found that the growth and the feed utilization in swine is improved, i.e. increased, by orally administering to the swine, in combination with their feed, a sufficient amount of frenolicin B to achieve the desired effect. The active ingredient frenolicin B may optionally be present as such or as a physiologically acceptable salt or ester thereof, since it is well known in the veterinary art that a physiologically acceptable salt or ester form of such an antibiotic is immaterial in the treatment or well-being of the animal, and that the salt or ester form may be chosen for reasons of economics, convenience, stability etc. In the following description the term "frenolicin B" (when used alone) or "active ingredient" is to be so understood, unless otherwise indicated, as to mean frenolicin B itself or a physiologically acceptable salt or ester thereof; however, where weight data are given, these relate to frenolicin B alone or the frenolicin B part of a physiologically acceptable salt or ester thereof.

Accordingly, the present invention provides a swine feed composition for increasing the growth and feed utilization in swine, characterized in that it contains as an active ingredient an effective amount of frenolicin B or a physiologically acceptable salt or ester thereof. The method of increasing the growth and feed utilization in swine, comprising orally administering to swine, in combination with their feed, an effective amount of frenolicin B or of a physiologically acceptable salt or ester thereof, represents a further aspect of the present invention.

The swine feed compositions of this invention can be prepared by mixing the active ingredient, frenolicin B, either directly, or as part of a concentrate or premix (hereinafter referred to solely as premix), into a conventional swine feed. Thus, the method, according to the present invention, of preparing a swine feed composition is characterized by adding the appropriate amount of frenolicin B or of a physiologically acceptable salt or ester thereof to conventional swine feed by mixing or by forming a premix of said frenolicin B or physiologically acceptable salt or ester thereof by mixing this with a non-toxic edible carrier and then adding the resulting premix to a conventional swine feed by mixing. It has been found that if the active ingredient is combined with the feed in a concentration of from about 20 grams to about 60 grams per ton (about 22 mg to about 66 mg per kg) of feed, the desired growth promotion and feed efficiency occurs. A preferred range is from about 40 grams per ton to about 60 grams per ton (about 44 mg to about 66 mg per kg). The preferred amount of active ingredient combined with the swine feed, according to this invention, is about 60 grams per ton (about 66 mg per kg) of feed.

It is generally most desirable to combine a sufficient amount of the active ingredient with the ration to provide about 1.5 mg per pound (about 3.31 mg per kg) of body weight per day in the feed of young pigs and about 0.75 mg per pound (about 1.65 mg per kg) of body weight per day in pigs ready for market. These figures represent the average amounts of frenolicin B ingested with feed by the animals when the feed contains about 50 g of the active ingredient per ton (about 55 mg of the active ingredient per kg). These amounts can, of course, be varied depending on the size and condition of the animals. In this regard, for the range of from about 20 grams per ton to about 60 grams per ton (about 22 mg to about 66 mg per kg), the amount per pound (per kg) body weight per day in the feed of young pigs is suitably from about 0.6 mg (about 1.32 mg) to about 2.4 mg (about 5.29 mg). For the range of from about 20 grams per ton to about 60 grams per ton (about 22 mg to about 66 mg per kg) of feed, the amount per pound (per kg) of body weight per day in the feed of pigs ready for market is suitably from about 0.3 mg (about 0.66 mg) to about 1.2 mg (about 2.65 mg). Taking both young pigs and pigs ready for market into account the range, expressed in grams of active ingredient per kg body weight per day is suitably from about 0.66 mg to about 5.29 mg.

Usually, for growth promotant effects in swine, the active ingredient is included in the feed beginning with weaning until the age and weight suitable for marketing is reached.

The swine feed compositions of this invention can be suitably prepared by (1) adding the active ingredient directly to conventional swine feed by mixing, for example, in a vertical feed mixer; or (2) forming a premix of the active ingredient by mixing frenolicin B or a physiologically acceptable salt or ester thereof with a suitable non-toxic edible carrier, e.g., corn meal, corn distillers dried grains, soybean meal, soya grits, soy flour, wheat middlings, farina, rice grits, malt sprouts, limestone, oyster shell meal, oyster shell flour, rice bran, crimped oats, oatmeal, brewers grains, salt, calcium silicate, clay, dicalcium phosphate, talc, fish meal, dried fish solubles, meat scraps, tankage, bone meal, dried whey, dried milk solids, antibiotic mycelia, fermentation solubles, distillers solubles, molasses solubles, dried yeast, dried citrus meal and the like, whereby various oils, for example, soy oil, may also be included in the premix, and then adding the resulting premix to the feed by mixing, using, for example, a feed mixer or a feed blender.

The concentration of the active ingredient (frenolicin B) in the premix of the present invention can range from a very small amount (about 5 weight percent or even less) to a large amount (about 50 weight percent or even more) in order to provide for convenient mixing of complete rations. Generally, a sufficient amount of active ingredient is present so that the addition of approximately one pound (approx. 0.4536 kg) of premix to the amount of feed required to total 2,000 lbs (907.2 kg). will provide the desired dose level. For example: one pound (0.4536 kg) of premix containing 60 grams of frenolicin B per pound of premix (13.4% premix) added to 1,999 lbs (906.7 kg) of ration would yield a level of 60 grams of frenolicin B per ton (66 mg of frenolicin B per kg) of feed.

The invention is illustrated by the following Examples:

Example 1

Examples of the types of premixes that can be used to provide desired dose levels are shown below. In each case frenolicin B is used as such.

| Premix No. 1 | | | |
|---|---|---|---|
| Ingredient | Grams/Kilogram | | |
| MIXTURE | A | B | C |
| Frenolicin B | 22 | 44 | 66 |
| Calcium Silicate (Microcel E) | 20 | 20 | 20 |
| Calcium Carbonate (Oyster Shell Flour) | 958 | 936 | 912 |
| Total Weight | 1000 | 1000 | 1000 |

The frenolicin B is blended with Microcel E. The oyster shell flour is placed in a suitable mixer, the frenolicin B/Microcel blend is added and the entire amount is mixed until homogeneous.

This premix is then added to commercial swine ration at the rate of about 2 pounds per ton (about 1 kg per 1000 kg) to yield a concentration of about 20 grams frenolicin B per ton (about 22 mg/kg) for MIXTURE A, about 40 grams frenolicin B per ton (about 44 mg/kg) for MIXTURE B, and about 60 grams frenolicin B per ton (about 66 mg/kg) for MIXTURE C. The commercial feeds to which this premix is added may be free of other active ingredients or may contain other active ingredients if the final mixture is compatible therewith.

| Premix No. 2 | | | |
|---|---|---|---|
| Ingredient | Grams/Kilogram | | |
| MIXTURE | A | B | C |
| Frenolicin B | 22 | 44 | 66 |
| Calcium Silicate (Microcel E) | 20 | 20 | 20 |
| Soy Oil | 20 | 20 | 20 |
| Ground Rice Hulls | 938 | 916 | 894 |
| Total Weight | 1000 | 1000 | 1000 |

The ground rice hulls are placed in a suitable mixer and about 20 grams (2% by weight of the final mixture) of the soy oil is slowly added thereto and the whole thoroughly mixed. The frenolicin B with the Microcel E is added thereto and the whole thoroughly mixed until homogeneous.

This premix is then added to commercial swine ration at the rate of about 2 pounds per ton (about 1 kg per 1000 kg) to yield a concentration of about 20 grams frenolicin B per ton (about 22 mg/kg) for MIXTURE A, about 40 grams frenolicin B per ton (about 44 mg/kg) for MIXTURE B, and about 60 grams frenolicin B per ton (about 66 mg/kg) for MIXTURE C. The commercial feeds to which this premix is added may be free of other active ingredients or may contain other active ingredients if the final mixture is compatible therewith.

Example 2

Sixty-four crossbred feeder pigs (32 male and 32 female) averaging 35 lbs (15.88 kg) in body weight were randomly assigned to one of four treatment groups. The four treatment groups were 0 (Control), 20, 40 or 60 grams of frenolicin B (itself) per ton (0, 22, 44 or 66 mg frenolicin B per kg) of feed. Each treatment group contained four replicates of four pigs each. There were 16 pigs (8 male and 8 female) assigned to each treatment group with males and females penned separately yielding two replicates each of male or female pigs for each treatment group. Four pigs of the same sex were randomly assigned to a pen, then two pens of the same sex were randomly assigned to each of the four treatment groups. Each pig was identified by individual unique numbered ear tags.

The four pigs of each replicate were housed together in separate pens that provided approximately 10 square feet per animal. The pens were constructed of concrete block walls with a partially slatted concrete floor to control waste. Feed was provided ad libitum in gravity flow feeders and water was supplied ad libitum via automatic nipple type waterers.

The pigs were fed a diet, typical of commercial rations according to the following table:

| Diet | Protein Level | Approximate Body Weight of Pigs |
|------|---------------|--------------------------------|
| Starter | 19% | 35 - 75 lbs (15.88-34.02 kg) |
| Grower | 16% | 75 - 110 lbs (34.02-49.90 kg) |
| Finisher | 13% | 110 lbs + (49.90 kg +) |

Body weights (in lbs) were obtained every seven days for 56 days, for each pig, and the feed remaining in each feeder was weighed each week, at the time of body weight collection, to determine the amount of feed consumed for each pen. Average daily gain (lbs/head/day) and feed conversion, feed consumed per pound of body weight gained were calculated from body weights and feed consumption.

Individual body weights and pen feed consumption were obtained on day 0, 7, 14, 21, 28, 35, 42, 49 and 56 for the 0 (control), 20, 40 and 60 grams per ton (0, 22, 44 and 66 mg per kg) treatment groups. The results for average daily gain for each pen at each weekly interval as well as cumulatively for each consecutive week are presented in Table 1. Table 2 contains the average feed conversion for each pen at each weekly interval and cumulatively for each consecutive week. Weekly and cumulative data for average daily feed consumption for each pen are presented in Table 3.

EP 0 580 059 A2

## TABLE 1

### AVERAGE DAILY GAIN
(LBS : 1 lb = 0.4536 kg))

**DAYS**

| TREATMENT | PEN | SEX | 0-7 | 8-14 | 0-14 | 15-21 | 0-21 | 22-28 | 0-28 | 29-35 | 0-35 | 36-42 | 0-42 | 43-49 | 0-49 | 50-56 | 0-56 |
|---|---|---|---|---|---|---|---|---|---|---|---|---|---|---|---|---|---|
| | 5 | F | 1.30 | 1.78 | 1.54 | 1.60 | 1.56 | 1.79 | 1.62 | 1.60 | 1.62 | 1.71 | 1.63 | 1.54 | 1.62 | 1.45 | 1.60 |
| CONTROL | 7 | M | 1.49 | 1.76 | 1.63 | 1.78 | 1.68 | 1.71 | 1.69 | 1.81 | 1.71 | 1.95 | 1.75 | 1.76 | 1.75 | 1.84 | 1.76 |
| | 10 | M | 1.43 | 1.82 | 1.63 | 1.76 | 1.67 | 1.89 | 1.72 | 1.89 | 1.76 | 1.89 | 1.78 | 1.52 | 1.74 | 1.65 | 1.73 |
| | 11 | F | 1.40 | 1.62 | 1.51 | 1.67 | 1.56 | 1.82 | 1.63 | 1.71 | 1.64 | 1.73 | 1.66 | 1.82 | 1.68 | 1.74 | 1.69 |
| AVERAGE | | | 1.41 | 1.75 | 1.58 | 1.70 | 1.62 | 1.80 | 1.67 | 1.75 | 1.68 | 1.82 | 1.71 | 1.66 | 1.70 | 1.67 | 1.70 |
| | 4 | M | 1.63 | 1.89 | 1.76 | 1.67 | 1.73 | 1.76 | 1.74 | 2.01 | 1.79 | 1.82 | 1.80 | 2.04 | 1.83 | 2.04 | 1.86 |
| FRENOLICIN | 6 | F | 1.43 | 1.95 | 1.69 | 1.87 | 1.75 | 1.87 | 1.78 | 2.07 | 1.84 | 1.78 | 1.83 | 1.46 | 1.78 | 2.06 | 1.81 |
| 20 G/TON | 9 | F | 1.48 | 1.56 | 1.52 | 1.76 | 1.60 | 1.74 | 1.63 | 1.85 | 1.68 | 2.00 | 1.73 | 1.89 | 1.75 | 1.87 | 1.77 |
| (22 mg/kg) | 14 | M | 1.56 | 1.85 | 1.71 | 1.82 | 1.74 | 1.96 | 1.80 | 2.09 | 1.86 | 2.06 | 1.89 | 1.87 | 1.89 | 1.87 | 1.89 |
| AVERAGE | | | 1.53 | 1.81 | 1.67 | 1.78 | 1.71 | 1.83 | 1.74 | 2.01 | 1.79 | 1.92 | 1.81 | 1.82 | 1.81 | 1.96 | 1.83 |
| | 2 | M | 1.67 | 1.84 | 1.75 | 2.11 | 1.87 | 2.00 | 1.90 | 2.42 | 2.01 | 2.12 | 2.02 | 2.28 | 2.06 | 2.39 | 2.10 |
| FRENOLICIN | 3 | F | 1.49 | 1.59 | 1.54 | 1.46 | 1.51 | 1.27 | 1.45 | 1.40 | 1.44 | 1.84 | 1.51 | 1.49 | 1.51 | 1.79 | 1.54 |
| 40 G/TON | 12 | F | 1.54 | 1.65 | 1.60 | 1.67 | 1.62 | 1.87 | 1.68 | 2.11 | 1.77 | 1.96 | 1.80 | 1.95 | 1.82 | 2.01 | 1.84 |
| (44 mg/kg) | 16 | M | 1.84 | 2.01 | 1.93 | 1.95 | 1.93 | 2.17 | 1.99 | 2.04 | 2.00 | 2.31 | 2.05 | 2.15 | 2.07 | 2.25 | 2.09 |
| AVERAGE | | | 1.64 | 1.77 | 1.71 | 1.80 | 1.73 | 1.83 | 1.76 | 1.99 | 1.81 | 2.06 | 1.85 | 1.97 | 1.87 | 2.11 | 1.89 |
| | 1 | M | 1.52 | 1.81 | 1.67 | 1.82 | 1.72 | 2.03 | 1.80 | 2.17 | 1.87 | 2.12 | 1.91 | 2.34 | 1.97 | 1.85 | 1.96 |
| FRENOLICIN | 8 | F | 1.52 | 1.87 | 1.70 | 1.76 | 1.72 | 1.93 | 1.77 | 1.67 | 1.75 | 1.92 | 1.78 | 1.78 | 1.78 | 1.79 | 1.78 |
| 60 G/TON | 13 | M | 1.65 | 1.85 | 1.75 | 1.78 | 1.76 | 2.01 | 1.82 | 2.18 | 1.90 | 2.25 | 1.95 | 1.96 | 1.96 | 2.11 | 1.97 |
| (66 mg/kg) | 15 | F | 1.61 | 1.97 | 1.79 | 1.89 | 1.82 | 2.05 | 1.88 | 2.30 | 1.97 | 2.10 | 1.99 | 1.95 | 1.98 | 2.10 | 2.00 |
| AVERAGE | | | 1.58 | 1.88 | 1.73 | 1.81 | 1.76 | 2.01 | 1.82 | 2.08 | 1.87 | 2.10 | 1.91 | 2.01 | 1.92 | 1.96 | 1.93 |

EP 0 580 059 A2

## TABLE 2

### AVERAGE FEED CONVERSION

### DAYS

| TREATMENT | PEN | SEX | 0-7 | 8-14 | 0-14 | 15-21 | 0-21 | 22-28 | 0-28 | 29-35 | 0-35 | 36-42 | 0-42 | 43-49 | 0-49 | 50-56 | 0-56 |
|---|---|---|---|---|---|---|---|---|---|---|---|---|---|---|---|---|---|
| | 5 | F | 1.80 | 1.81 | 1.80 | 2.29 | 1.97 | 2.36 | 2.08 | 2.61 | 2.18 | 2.66 | 2.27 | 2.96 | 2.36 | 3.19 | 2.46 |
| | 7 | M | 1.55 | 1.73 | 1.65 | 2.32 | 1.88 | 2.44 | 2.02 | 2.49 | 2.12 | 2.79 | 2.25 | 3.16 | 2.38 | 3.12 | 2.47 |
| CONTROL | 10 | M | 1.77 | 1.80 | 1.79 | 2.28 | 1.96 | 2.43 | 2.09 | 2.51 | 2.18 | 2.67 | 2.26 | 3.32 | 2.40 | 3.23 | 2.50 |
| | 11 | F | 1.69 | 1.87 | 1.79 | 2.23 | 1.94 | 2.34 | 2.05 | 2.48 | 2.14 | 2.73 | 2.24 | 2.78 | 2.33 | 3.02 | 2.42 |
| AVERAGE | | | 1.70 | 1.80 | 1.76 | 2.28 | 1.94 | 2.39 | 2.06 | 2.52 | 2.16 | 2.71 | 2.26 | 3.06 | 2.37 | 3.14 | 2.46 |
| | 4 | M | 1.60 | 1.76 | 1.69 | 2.46 | 1.93 | 2.43 | 2.06 | 2.31 | 2.12 | 2.75 | 2.22 | 2.65 | 2.29 | 2.86 | 2.37 |
| FRENOLICIN | 6 | F | 1.56 | 1.64 | 1.61 | 2.16 | 1.80 | 2.50 | 1.99 | 2.17 | 2.03 | 2.85 | 2.16 | 3.42 | 2.31 | 2.56 | 2.34 |
| 20 G/TON | 9 | F | 1.71 | 1.96 | 1.84 | 2.13 | 1.94 | 2.44 | 2.08 | 2.39 | 2.15 | 2.46 | 2.21 | 2.98 | 2.33 | 2.98 | 2.41 |
| (22 mg/kg) | 14 | M | 1.66 | 1.92 | 1.80 | 2.35 | 1.99 | 2.54 | 2.14 | 2.44 | 2.21 | 2.70 | 2.30 | 3.29 | 2.44 | 3.29 | 2.54 |
| AVERAGE | | | 1.63 | 1.82 | 1.74 | 2.28 | 1.92 | 2.48 | 2.07 | 2.33 | 2.13 | 2.69 | 2.22 | 3.09 | 2.34 | 2.92 | 2.42 |
| | 2 | M | 1.71 | 1.97 | 1.85 | 2.27 | 2.01 | 2.54 | 2.15 | 2.35 | 2.20 | 2.60 | 2.27 | 2.87 | 2.36 | 2.82 | 2.43 |
| FRENOLICIN | 3 | F | 1.71 | 1.97 | 1.84 | 2.47 | 2.05 | 2.94 | 2.24 | 2.68 | 2.33 | 2.53 | 2.37 | 3.38 | 2.51 | 2.92 | 2.57 |
| 40 G/TON | 12 | F | 1.78 | 1.90 | 1.84 | 2.13 | 1.94 | 2.34 | 2.05 | 2.29 | 2.11 | 3.07 | 2.28 | 3.02 | 2.40 | 3.01 | 2.48 |
| (44 mg/kg) | 16 | M | 1.49 | 1.82 | 1.66 | 2.20 | 1.84 | 2.29 | 1.97 | 2.54 | 2.08 | 2.56 | 2.17 | 2.82 | 2.27 | 2.74 | 2.33 |
| AVERAGE | | | 1.67 | 1.92 | 1.80 | 2.27 | 1.96 | 2.53 | 2.10 | 2.47 | 2.18 | 2.69 | 2.27 | 3.02 | 2.39 | 2.87 | 2.45 |
| | 1 | M | 1.60 | 1.70 | 1.66 | 2.15 | 1.83 | 2.26 | 1.95 | 2.24 | 2.02 | 2.59 | 2.12 | 2.65 | 2.21 | 3.43 | 2.36 |
| FRENOLICIN | 8 | F | 1.68 | 1.58 | 1.63 | 2.19 | 1.82 | 2.24 | 1.93 | 2.46 | 2.03 | 2.34 | 2.09 | 2.83 | 2.19 | 3.09 | 2.31 |
| 60 G/TON | 13 | M | 1.70 | 1.81 | 1.76 | 2.17 | 1.90 | 2.25 | 1.99 | 2.26 | 2.05 | 2.41 | 2.12 | 2.96 | 2.24 | 2.95 | 2.34 |
| (66 mg/kg) | 15 | F | 1.55 | 1.62 | 1.59 | 1.92 | 1.70 | 2.31 | 1.87 | 2.07 | 1.92 | 2.57 | 2.03 | 2.87 | 2.15 | 2.78 | 2.23 |
| AVERAGE | | | 1.63 | 1.68 | 1.66 | 2.11 | 1.81 | 2.27 | 1.94 | 2.26 | 2.01 | 2.48 | 2.09 | 2.83 | 2.20 | 3.06 | 2.31 |

**TABLE 3**

**AVERAGE DAILY FEED CONSUMPTION**
(LBS : 1 lb = 0.4536 kg))

DAYS

| TREATMENT | PEN | SEX | 0-7 | 8-14 | 0-14 | 15-21 | 0-21 | 22-28 | 0-28 | 29-35 | 0-35 | 36-42 | 0-42 | 43-49 | 0-49 | 50-56 | 0-56 |
|---|---|---|---|---|---|---|---|---|---|---|---|---|---|---|---|---|---|
| CONTROL | 5 | F | 2.34 | 3.21 | 2.77 | 3.68 | 3.07 | 4.24 | 3.36 | 4.18 | 3.53 | 4.55 | 3.70 | 4.57 | 3.82 | 4.61 | 3.92 |
| | 7 | M | 2.31 | 3.05 | 2.68 | 4.12 | 3.16 | 4.17 | 3.41 | 4.49 | 3.63 | 5.43 | 3.93 | 5.56 | 4.16 | 5.73 | 4.36 |
| | 10 | M | 2.53 | 3.28 | 2.90 | 4.02 | 3.27 | 4.57 | 3.60 | 4.73 | 3.82 | 5.04 | 4.03 | 5.07 | 4.18 | 5.33 | 4.32 |
| | 11 | F | 2.37 | 3.03 | 2.70 | 3.71 | 3.03 | 4.27 | 3.34 | 4.24 | 3.52 | 4.72 | 3.72 | 5.06 | 3.91 | 5.26 | 4.08 |
| AVERAGE | | | 2.39 | 3.14 | 2.76 | 3.88 | 3.13 | 4.31 | 3.43 | 4.41 | 3.63 | 4.94 | 3.85 | 5.07 | 4.02 | 5.23 | 4.17 |
| FRENOLICIN 20 G/TON (22 mg/kg) | 4 | M | 2.61 | 3.32 | 2.97 | 4.09 | 3.34 | 4.28 | 3.58 | 4.64 | 3.79 | 5.01 | 3.99 | 5.41 | 4.20 | 5.85 | 4.40 |
| | 6 | F | 2.23 | 3.20 | 2.71 | 4.03 | 3.15 | 4.68 | 3.53 | 4.50 | 3.73 | 5.07 | 3.95 | 5.00 | 4.10 | 5.27 | 4.25 |
| | 9 | F | 2.52 | 3.05 | 2.79 | 3.75 | 3.11 | 4.26 | 3.39 | 4.42 | 3.60 | 4.91 | 3.82 | 5.63 | 4.08 | 5.57 | 4.26 |
| | 14 | M | 2.59 | 3.57 | 3.08 | 4.28 | 3.48 | 4.98 | 3.85 | 5.09 | 4.10 | 5.56 | 4.35 | 6.16 | 4.60 | 6.15 | 4.80 |
| AVERAGE | | | 2.49 | 3.29 | 2.89 | 4.04 | 3.27 | 4.55 | 3.59 | 4.66 | 3.81 | 5.14 | 4.03 | 5.55 | 4.25 | 5.71 | 4.43 |
| FRENOLICIN 40 G/TON (44 mg/kg) | 2 | M | 2.84 | 3.63 | 3.24 | 4.78 | 3.75 | 5.07 | 4.08 | 5.69 | 4.40 | 5.51 | 4.59 | 6.53 | 4.86 | 6.74 | 5.10 |
| | 3 | F | 2.55 | 3.13 | 2.84 | 3.61 | 3.10 | 3.75 | 3.26 | 3.75 | 3.36 | 4.66 | 3.58 | 5.04 | 3.78 | 5.23 | 3.97 |
| | 12 | F | 2.73 | 3.14 | 2.94 | 3.54 | 3.14 | 4.37 | 3.45 | 4.82 | 3.72 | 6.03 | 4.11 | 5.89 | 4.36 | 6.05 | 4.57 |
| | 16 | M | 2.74 | 3.65 | 3.20 | 4.29 | 3.56 | 4.97 | 3.91 | 5.19 | 4.17 | 5.92 | 4.46 | 6.07 | 4.69 | 6.16 | 4.87 |
| AVERAGE | | | 2.72 | 3.39 | 3.06 | 4.06 | 3.39 | 4.54 | 3.68 | 4.86 | 3.91 | 5.53 | 4.19 | 5.88 | 4.42 | 6.05 | 4.63 |
| FRENOLICIN 60 G/TON (66 mg/kg) | 1 | M | 2.44 | 3.07 | 2.76 | 3.91 | 3.14 | 4.58 | 3.50 | 4.86 | 3.77 | 5.50 | 4.06 | 6.20 | 4.37 | 6.36 | 4.62 |
| | 8 | F | 2.55 | 2.96 | 2.76 | 3.85 | 3.12 | 4.33 | 3.42 | 4.09 | 3.56 | 4.48 | 3.71 | 5.02 | 3.90 | 5.54 | 4.10 |
| | 13 | M | 2.81 | 3.35 | 3.08 | 3.86 | 3.34 | 4.53 | 3.64 | 4.93 | 3.89 | 5.41 | 4.15 | 5.81 | 4.39 | 6.21 | 4.61 |
| | 15 | F | 2.50 | 3.18 | 2.84 | 3.62 | 3.10 | 4.74 | 3.51 | 4.78 | 3.77 | 5.37 | 4.03 | 5.59 | 4.26 | 5.82 | 4.45 |
| AVERAGE | | | 2.58 | 3.14 | 2.86 | 3.81 | 3.18 | 4.55 | 3.52 | 4.67 | 3.75 | 5.19 | 3.99 | 5.66 | 4.23 | 5.98 | 4.45 |

The study was conducted until day 56 at which time the average body weights (lbs/kg) for the 0, 20, 40 and 60 gram/ton (0, 22, 44 and 66 mg/kg) treatment groups were 129.4/58.7, 138.3/62.7, 142.0/64.4 and 144.4/65.5, respectively.

The percent improvement in average daily gain, feed conversion and feed intake of the frenolicin treated animals as compared to control for the 56 day feeding period is as follows:

7

| Treatment Group | Percent Improvement (%) | | Feed Intake (percent increase over control) |
|---|---|---|---|
| | Avg. Daily Gain | Feed Conversion* | |
| 0 | 0 | 0 | 0 |
| 20 | 7.7 | 1.6 | 6.2 |
| 40 | 11.2 | 0.4 | 11.0 |
| 60 | 13.5 | 6.1 | 6.7 |

* Percent change in feed conversion represents a decrease in the amount of feed consumed per pound of body weight gained by each treatment group as compared to control.

Statistical analysis of the results was completed using analysis of variance including terms for treatment, sex, and treatment by sex. Average daily gain from day 0 to week 8 and feed conversion from day 0 to week 6 and day 0 to week 8 were significantly different for the treatment groups. The results from the Linear Plateau Model for the overall performance indicates that the dose range of 20 to 40 grams/ton (22 or 44 mg/kg) would improve average daily gain. Sixty grams/ton (66 mg/kg) would have to be added to diets to achieve a statistically significant treatment and sex interaction overall.

There was a positive growth performance response for average daily gain and feed efficiency for all three frenolicin B treatment groups (20, 40 and 60 grams/ton = 22, 44 and 66 mg/kg). The highest level of 60 grams/ton (66 mg/kg) produced the greatest (13.5%) increase in average daily gain and also provided the best feed efficiency with the treated animals converting 6.1% less feed per pound of body weight gain as compared to controls. The frenolicin B treated pigs showed no signs of toxicity related to diets containing the experimental compound at 20, 40 or 60 grams/ton (22, 44 or 66 mg/kg) of feed.

The results obtained in this study indicate that frenolicin B is very active as a growth promoter when added to swine starter and grower rations at 20, 40 or 60 grams/ton (22, 44 or 66 mg/kg). The 60 gram/ton (66 mg/kg) level exerted the most influence improving average daily gain and feed efficiency.

## Claims

1. A swine feed composition for increasing the growth and feed utilization in swine, characterized in that it contains as an active ingredient an effective amount of frenolicin B or a physiologically acceptable salt or ester thereof.

2. A swine feed composition according to claim 1, wherein the concentration of frenolicin B, as such ot as part of the salt or ester thereof, is from about 22 mg to about 66 mg/kg of swine feed composition.

3. A swine feed composition according to claim 2, wherein said concentration is from about 44 mg to about 66 mg per kg of swine feed composition.

4. A swine feed premix composition intended for preparation of a swine feed composition as defined in any one of claims 1 to 3, characterized in that said premix composition contains frenolicin B or a physiologically acceptable salt or ester thereof in a concentration of from about 5 weight percent to about 50 weight percent of frenolicin B.

5. A method of preparing a swine feed composition as defined in any one of claims 1 to 3, characterized by adding the appropriate amount of frenolicin B or of a physiologically acceptable salt or ester thereof to conventional swine feed by mixing or by forming a premix of said frenolicin B or physiologically acceptable salt or ester thereof by mixing this with a non-toxic edible carrier and then adding the resulting premix to a conventional swine feed by mixing.

6. A method of increasing the growth and feed utilization in swine comprising orally administering to swine, in combination with their feed, an effective amount of frenolicin B or of a physiologically acceptable salt or ester thereof.

7. A method according to claim 6, wherein the frenolicin B or a physiologically acceptable salt or ester thereof is administered in a swine feed composition in an amount from about 22 mg to about 66 mg frenolicin B per kg of the swine feed composition.

8. A method according to claim 7, wherein the amount of frenolicin B is from about 44 mg to about 66 mg per kg of the swine feed composition.

9. The use of frenolicin B or of a physiologically acceptable salt or ester thereof for increasing the growth and feed utilization of swine.